# FASCICULE DE BREVET EUROPEEN

(11) **EP 0 556 137 B1**
(45) Date de publication et mention de la délivrance du brevet: **18.01.1995**
(21) Numéro de dépôt: 93420059.3
(22) Date de dépôt: 10.02.1993
(51) Int. Cl.: F16L 3/22, H02G 3/04

(54) **Eclisses pour treillis en fils soudés**
Verbinder für geschweisste Gitter
Joints for soldered wire nets

(30) Priorité: 11.02.1992 FR 9201722
(43) Date de publication de la demande: 18.08.1993
(73) Titulaire: MAVIL, F-21430 Liernais (FR)
(72) Inventeur: Simon, Bernard, F-69300 Caluire (FR)
(74) Mandataire: Karmin, Roger

(56) Documents cités:
- EP-A- 0 418 167
- DE-A- 2 036 325
- DE-A- 2 930 083
- FR-A- 2 017 070
- FR-A- 2 208 219
- FR-A- 2 395 449
- FR-A- 2 576 158
- FR-A- 2 652 142

## Description

La présente invention est relative à une éclisse à verrouillage automatique, qui est plus particulièrement destinée à réunir bout à bout des tronçons de chemin de câbles en treillis soudé.

On connaît depuis longtemps ce genre de tronçons de chemin de câbles en treillis soudé présentant une forme de gouttière et assemblés les uns aux autres pour supporter des canalisations diverses et en particulier des câbles électriques. Chaque tronçon de chemin de câbles est constitué par des fils de trame en forme de U sur lesquels sont soudés d'une part sur le fond des fils longitudinaux et d'autre part sur l'extérieur des branches du U des fils de rive.

Dans l'état de la technique actuelle, on utilise, pour assembler bout à bout les tronçons de chemin de câbles, des dispositifs à vis tels que des éclisses qui sont disposées sur l'extérieur des branches des fils de trame, et qui sont maintenues par des contre-éclisses et des boulons.

On connaît aussi, d'après la demande de brevet N° 2 208 219, des éclisses qui sont rigides dans leur partie centrale et élastiques dans leurs parties extrêmes. Ces dernières comportent respectivement un repli en forme de U prolongé par une patte inclinée. Ces éclisses sont placées à l'aide d'un outil entre deux fils longitudinaux ou deux fils de rive de deux tronçons de chemin de câble, de sorte que chacune de leurs extrémités vient s'engager sur un fil de trame de chacun des deux tronçons.

De telles éclisses sont réalisées dans un matériau élastique, par exemple un acier à ressort qui ne permet pas, après sa mise en place, de maintenir parfaitement les tronçons de chemin de câbles lorsque ceux-ci sont chargés. De plus, l'emploi d'un outil particulier ne facilite pas l'utilisation de ces éclisses, car elles doivent être allongées de manière non négligeable pour pouvoir être accrochées sur les fils de trame des deux tronçons à réunir.

On connaît d'après le brevet Français 2 017 070, des colliers d'assemblage comportant des poulies en forme de crochet qui entourent les fils longitudinaux de chaque chemin de câble. Entre les parties en forme de crochet, il est prévu une portion en U qui emprisonne les fils juxtaposés des chemins de câble à réunir. Les parties en forme de crochet sont disposées perpendiculairement à la portion en U permettant à l'utilisateur de serrer les colliers et plus particulièrement les crochets à l'aide d'une pince spéciale sur les fils longitudinaux des chemins de câble à réunir.

Les perfectionnements suivant la présente invention visent à remédier aux inconvénients ci-dessus et à permettre la réalisation d'une éclisse comportant une structure particulière permettant le verrouillage automatique de deux tronçons de chemin de câbles placés bout à bout.

Cette structure particulière consiste en une cornière en L dont l'une des extrémités est déformée et découpée pour réaliser deux segments de mêmes dimensions qui présentent chacun un profil en agrafe, tandis que la seconde extrémité est sectionnée en quatre languettes qui sont chacune ondulées pour former un passage en cuvette.

Un autre avantage de l'éclisse suivant l'invention consiste en ce que l'assemblage de deux tronçons de chemin de câbles bout à bout est obtenu par la mise en place de deux éclisses fixées en vis-à-vis sur l'extérieur des tronçons. Les éclisses sont introduites entre deux fils de trame de chaque tronçon, de manière que les extrémités de celles-ci viennent s'engager d'une part sur les fils de rive, et d'autre part sur les fils longitudinaux des tronçons à réunir.

Le dessin annexé, donné à titre d'exemple, permettra de mieux comprendre l'invention, les caractéristiques qu'elle présente et les avantages qu'elle est susceptible de procurer :

Fig. 1 est une vue en perspective éclatée illustrant partiellement deux tronçons de chemin de câbles en treillis soudé de grandes dimensions placés bout à bout et deux éclisses suivant l'invention.

Fig. 2 et 3 sont des coupes partielles représentant les étapes successives de mise en place des éclisses pour l'assemblage des deux tronçons de chemin de câbles de grandes dimensions.

Fig. 4 est une vue en perspective montrant les deux tronçons de chemin de câbles de grandes dimensions réunis au moyen des éclisses suivant l'invention.

Fig. 5 est une vue en perspective semblable à celle de fig. 1, mais illustrant deux tronçons de chemin de câbles en treillis soudé de petites dimensions placés bout à bout en vue de leur assemblage au moyen des éclisses suivant l'invention.

Fig. 6 et 7 sont des coupes partielles représentant les étapes successives de mise en place des éclisses pour l'assemblage des deux tronçons de chemin de câbles de petites dimensions.

Fig. 8 est une vue en perspective montrant deux tronçons de chemin de câbles de petites dimensions réunis au moyen des éclisses.

Fig. 9 est une vue en perspective illustrant une variante d'exécution d'une éclisse suivant l'invention.

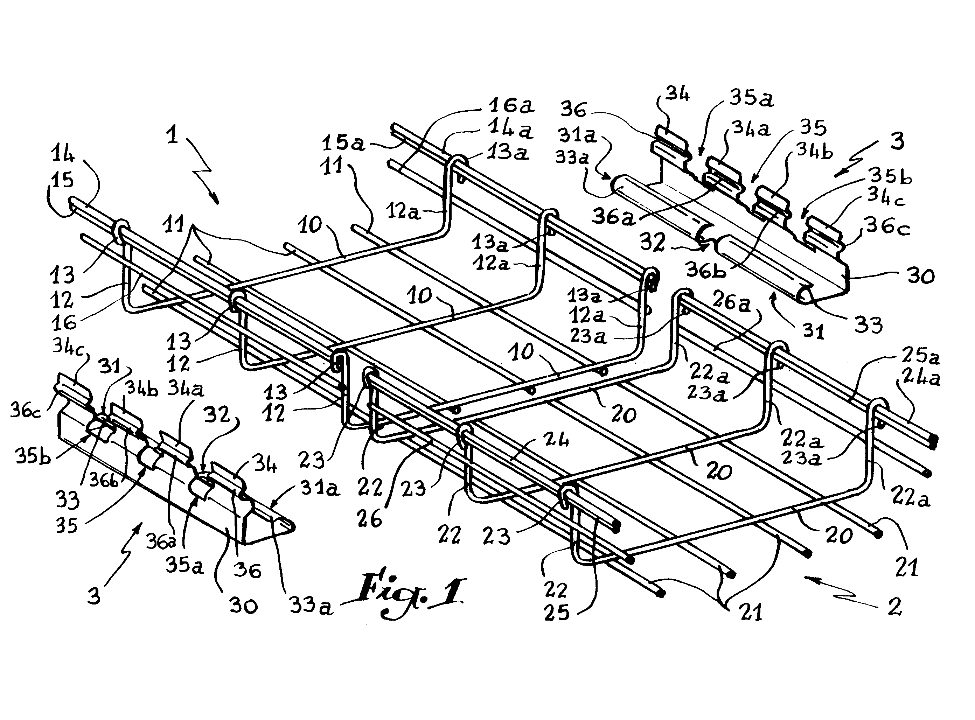

On a représenté en fig. 1 deux tronçons de chemin de câbles de grandes dimensions 1 et 2 qui sont rigoureusement semblables et qui doivent être assemblés au moyen de deux éclisses 3 identiques. Chaque tronçon de chemin de câbles 1 et 2 comporte un certain nombre de fils de trame 10, 20 en forme de U reliés les uns aux autres par l'intermédiaire de fils longitudinaux 11, 21 qui sont soudés sous le fond du U. Le nombre de fils longitudinaux 11, 21 varie suivant la largeur dudit fond.

Les fils de trame 10, 20 des tronçons 1 et 2 comportent des branches latérales 12, 12a et 22, 22a dont les bouts sont repliés en direction de l'extérieur sous la forme de crochets 13, 13a et 23, 23a. A l'intérieur des plis réalisés par les crochets 13, 13a et 23, 23a de chaque fil de trame 10, 20 sont soudés deux fils de rive supérieurs 14, 14a ; 15, 15a et 24, 24a ; 25, 25a de diamètres différents. En dessous des crochets 13, 13a et 23, 23a est soudé un autre fil de rive 16, 16a et 26, 26a propre à consolider l'ensemble des tronçons de chemin de câbles de grandes dimensions 1 et 2.

Les bouts de chaque tronçon de chemin de câbles 1 et 2 sont réunis par l'intermédiaire de deux éclisses identiques 3 comportant une structure particulière pour le verrouillage automatique desdits tronçons. La structure particulière consiste en une cornière 30 en forme de L dont l'une des ailes est découpée en deux segments de dimensions équivalentes 31, 31a de manière à former un espace libre 32 d'une largeur déterminée et symétrique par rapport à l'axe transversal de la cornière 30. Les segments 31, 31a sont repliés en agrafes 33, 33a dont on verra mieux plus loin la fonction.

La seconde aile de la cornière 30 est découpée en quatre languettes 34, 34a, 34b, 34c successives, de même configuration entre lesquelles sont prévus des espaces libres 35, 35a et 35b dont l'un au moins et préférablement l'espace 35 est d'une dimension identique à celle de l'espace 32 précité et disposé en vis-à-vis.

Les languettes 34, 34a, 34b, 34c sont ondulées pour réaliser des passages en forme de cuvette 36, 36a, 36b, 36c qui sont coaxiaux de manière à être alignés suivant la longueur de la cornière 30. On constate que pour chaque segment 33, 33a correspondent respectivement deux languettes 34, 34a et 34b, 34c qui sont réparties symétriquement par rapport à l'axe transversal des espaces libres 32 et 35, comme on le verra mieux plus loin.

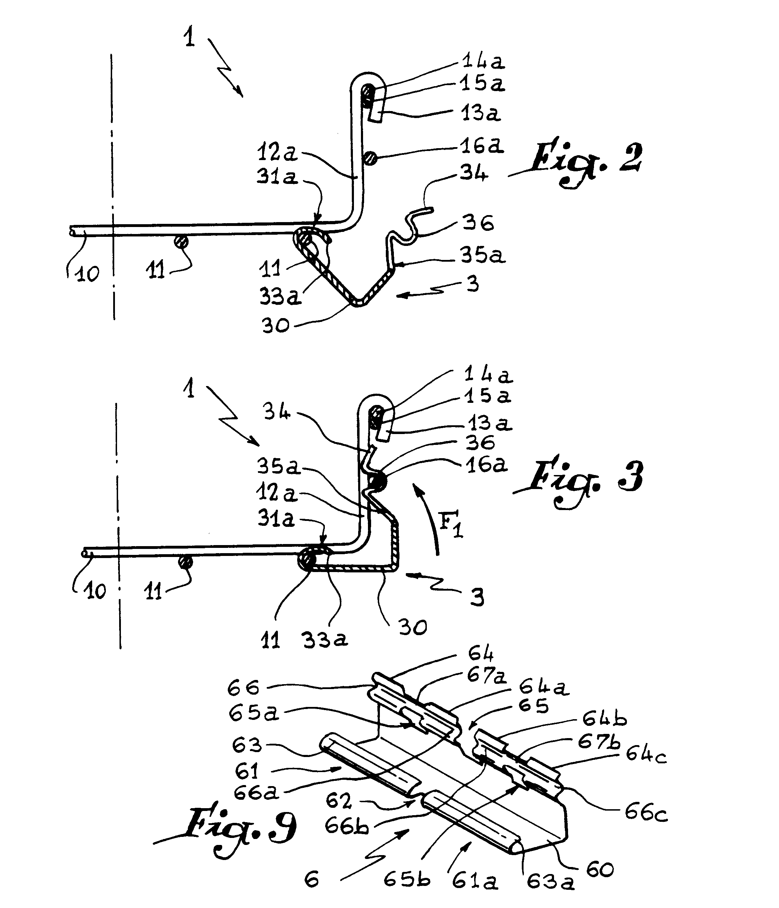

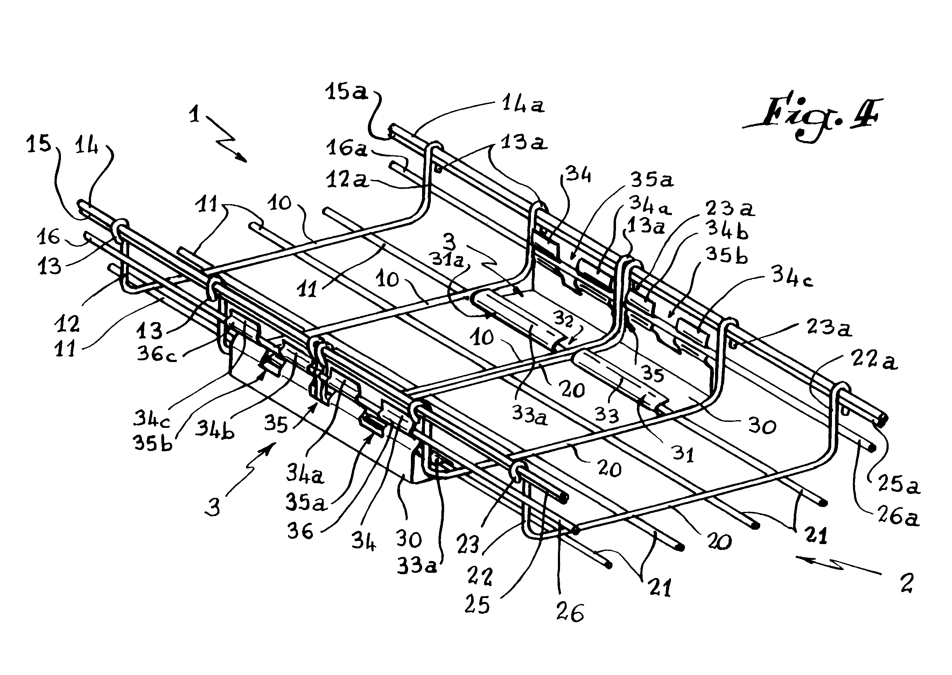

En fig. 2 et 3, on a représenté les étapes successives de mise en place des éclisses 3 en vis-à-vis sur le côté extérieur de chaque tronçon de chemin de câbles 1 et 2 en vue de les réunir. Par souci de clarté et de compréhension, ces figures représentent la mise en place d'une seule éclisse 3 sur le côté extérieur d'un tronçon et préférablement celui référencé 1, étant donné que la fixation de l'éclisse est réalisée simultanément sur les deux tronçons.

La mise en place des éclisses 3 sur le côté extérieur des tronçons de chemin de câbles 1 et 2 suivant l'invention s'effectue de la manière suivante :

Une fois que deux tronçons de chemin de câbles 1 et 2 ont été placés bout à bout, une éclisse 3 est présentée de manière oblique (fig. 2), son agrafe 33a appartenant au segment 31a est accrochée au fil longitudinal 11 se trouvant le plus près du bord extérieur du tronçon 1. On fait ensuite pivoter l'éclisse 3 suivant le sens de la flèche F1 de manière que la languette correspondante 34 se trouve à proximité du fil de rive 16a (fig. 3). Enfin, par déformation élastique de la languette 34, le fil de rive 16a est engagé par force à l'intérieur de la cuvette 36 afin de s'encliqueter juste en dessous du crochet 13a du fil de trame 10 du tronçon de chemin de câbles 1 (fig. 3).

Il va de soi que pour chaque tronçon 1 et 2, deux éclisses 3 sont mises en place en vis-à-vis, comme indiqué précédemment, en vue d'obtenir la liaison illustrée en fig. 4.

On remarque de plus en fig. 4 que les fils de trame extrêmes 10 et 20 de chaque tronçon 1 et 2 coopèrent avec les espaces libres 32 et 35 de la cornière 30. Les extrémités des segments 31, 31a et des languettes 34a, 34b bordant respectivement les espaces libres 32 et 35 permettent de retenir latéralement les fils de trame extêmes 10 et 20 dans le cas où les tronçons 1 et 2 viendraient à se déplacer.

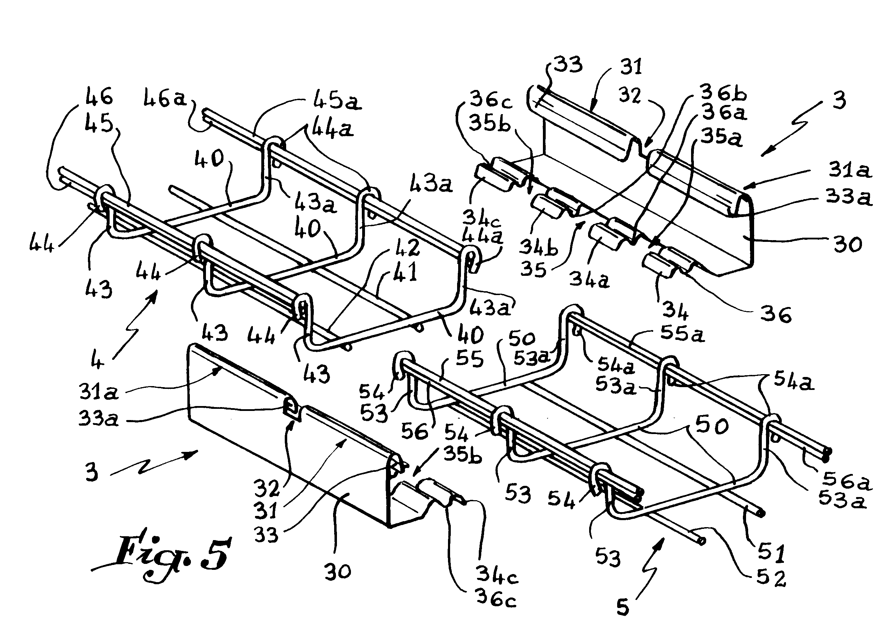

On a représenté en fig. 5 deux tronçons de chemin de câbles 4 et 5 de petites dimensions qui sont à assembler bout à bout au moyen de deux éclisses 3 placées en vis-à-vis, comme décrit précédemment.

Chaque tronçon de chemin de câbles 4 et 5 comporte un certain nombre de fils de trame, 40, 50 en forme de U reliés les uns aux autres par l'intermédiaire de deux fils longitudinaux 41, 42 et 51, 52 qui sont soudés sous le fond du U.

Les fils de trame 40 et 50 des tronçons 4 et 5 comportent des branches latérales 43, 43a et 53, 53a dont les bouts sont repliés en direction de l'extérieur sous la forme de crochets 44, 44a et 54, 54a. A l'intérieur des plis réalisés par les crochets 44, 44a et 54, 54a de chaque fil de trame 40 et 50 sont soudés deux fils de rive supérieurs 45, 45a ; 46, 46a et 55, 55a ; 56, 56a de diamètres différents.

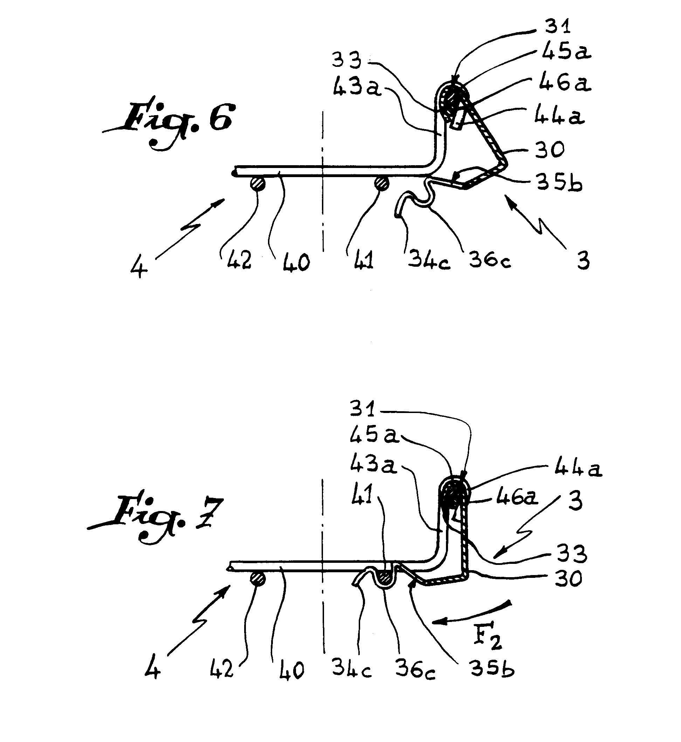

En fig. 6 et 7, on a représenté les étapes successives de mise en place des éclisses 3 en vis-à-vis sur le côté extérieur de chaque tronçon de chemin de câbles 4 et 5 en vue de les réunir.

Une fois que deux tronçons de chemin de câbles 4 et 5 ont été placés bout à bout, une éclisse 3 est présentée de manière oblique (fig. 6), afin que par exemple son agrafe 33 appartenant au segment 31 soit accroché sur les fils de rive 45a, 46a. L'éclisse 3 est ensuite tournée suivant le sens de la flèche F2 de manière que la languette correspondante 34c vienne se trouver à proximité du fil longitudinal 41. Enfin, par déformation élastique de la languette 34c, le fil longitudinal 41 est engagé à force à l'intérieur de la cuvette 36c afin de s'encliqueter en vue de réunir les tronçons de chemin de câbles.

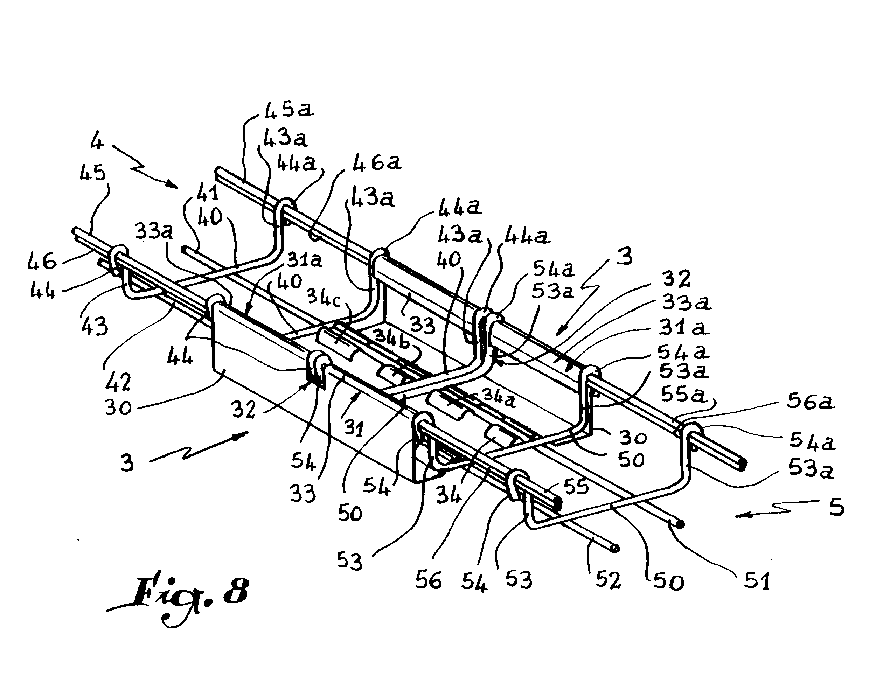

Il va de soi que pour chaque tronçon de chemin de câbles 4 et 5, deux éclisses 3 sont mises en place en vis-à-vis, comme indiqué précédemment en vue d'obtenir la liaison illustrée en fig. 8.

On remarque de même en fig. 8 que les fils de trame extrêmes 40 et 50 de chaque tronçon de chemin de câbles 4 et 5 coopèrent avec les espaces libres 32 et 35 de la cornière 30. De ce fait, les extrémités des segments 31, 31a et des languettes 34a et 34b bordant respectivement les espaces libres 32 et 35 permettent de retenir latéralement les fils de trame extrêmes 40 et 50 dans le cas ou les tronçons 4 et 5 viendraient à se déplacer.

On remarque que l'on utilise la même éclisse 3 pour la fixation des tronçons de chemin de câbles 1, 2 et 4, 5 et ceci par une double rotation de l'éclisse afin de pouvoir la présenter suivant les deux positions (fig. 1 et 5).

En fig. 9, on a représenté une variante référencée 6 de l'éclisse 3 et construite à partir d'une cornière 60 dont l'une des ailes est découpée en deux segments 61, 61a de mêmes dimensions de manière à former un espace libre 62 d'une largeur déterminée.

Les segments 61 et 61a présentent un profil en agrafe 63, 63a qui permet d'accrocher l'éclisse 6 sur les tronçons de chemin de câbles, comme décrit précédemment. La seconde aile de la cornière 60 est découpée en quatre languettes 64, 64a, 64b, 64c de même configuration qui sont séparées par des espaces libres 65, 65a, 65b, dont l'un au moins, et préférablement celui référencé 65, est d'une dimension identique à celle de l'espace libre 62 et disposé en vis-à-vis pour pouvoir recevoir les fils de trame extrêmes de chaque tronçon de chemin de câbles. Les languettes 64, 64a, 64b, 64c sont ondulées pour réaliser des passages en forme de cuvette 66, 66a, 66b, 66c. Ces dernières sont coaxiales de manière à être alignées suivant la longueur de la cornière 60. Les espaces libres 65a et 65b sont fermés dans leurs parties supérieures par des bandes courbées 67a et 67b qui réunissent d'une part la cuvette 66 avec la cuvette 66a et d'autre part la cuvette 66b avec la cuvette 66c.

Le procédé de mise en place de l'éclisse 6 pour des tronçons de chemin de câble de grandes dimensions ou de petites dimensions reste identique à celui décrit précédemment.

## Revendications

1. Eclisse pour l'assemblage de tronçons de chemin de câbles constitués en particulier par des treillis de fils métalliques soudés, caractérisée en ce qu'elle comprend une cornière (30) dont l'une des ailes est découpée pour réaliser deux segments (31, 31a) de mêmes dimensions qui sont séparés par un espace libre (32), tandis que chaque segment présente un profil en agrafe (33, 33a), la seconde aile étant découpée en quatre languettes (34, 34a, 34b, 34c) identiques qui sont chacune ondulées pour constituer un passage en forme de cuvette (36, 36a, 36b, 36c), les languettes étant séparées les unes des autres par des espaces libres (35, 35a, 35b) de façon que l'espace libre (32) soit en face de l'espace libre (35) de l'autre aile.

2. Eclisse pour l'assemblage de tronçons de chemin de câble en treillis soudé, caractérisée en ce qu'elle comprend une cornière (60) dont l'une des ailes est découpée en deux segments (61, 61a) de mêmes dimensions qui sont séparés par un espace libre (62), tandis que chaque segment présente un profil en agrafe (63, 63a), la seconde aile étant découpée en quatre languettes identiques (64, 64a, 64b, 64c) qui sont chacune ondulées pour constituer un passage en forme de cuvette (66, 66a, 66b, 66c), les languettes étant séparées les unes des autres par des espaces libres (65, 65a, 65b) dont deux au moins (65a et 65b) sont fermés dans leurs parties supérieures par des bandes courbées (67a et 67b) qui permettent de relier d'une part la cuvette (66) avec la cuvette (66a) et d'autre part la cuvette (66b) avec la cuvette (66c), de sorte que l'espace libre (65) se trouve en face de l'espace libre (62) de l'autre aile.

3. Procédé pour la mise en place de tronçons de chemin de câbles en treillis soudé utilisant une éclisse suivant la revendication 1 ou 2, caractérisé en ce qu'il consiste :
- à placer deux tronçons de chemin de câbles (1 et 2) bout à bout ;
- à présenter une première éclisse (3 ; 6) de façon que ses agrafes (33, 33a ; 63, 63a) appartenant respectivement aux segments (31, 31a ; 61, 61a) soient accrochées aux fils longitudinaux (11, 21) se trouvant à proximité du bord extérieur de chaque tronçon (1 et 2) ;
- à faire pivoter l'éclisse (3 ; 6) de manière que les languettes (34, 34a ; 34b, 34c et 64, 64a ; 64b, 64c) se trouvent respectivement à proximité des fils de rive (16a, 26a) de chaque tronçon ;
- à encliqueter les fils de rive (16a, 26a) à l'intérieur des cuvettes (36, 36a, 36b, 36c ; 66, 66a, 66b, 66c) de chaque languette (34, 34a, 34b, 34c ; 64, 64a, 64b, 64c) afin que les fils de trame extrêmes (10, 20) des tronçons (1 et 2) coopèrent avec les espaces libres (32, 35 ; 62, 65) ;
- et à assembler une seconde éclisse (3 ; 6) en face de la première.

4. Procédé pour la mise en place de tronçons de chemin de câbles en treillis soudé utilisant une éclisse suivant la revendication 1, caractérisé en ce qu'il consiste :
- à placer deux tronçons de chemin de câbles (4 et 5) bout à bout ;
- à présenter une première éclisse (3 ; 6) de façon que ses agrafes (33, 33a ; 63, 63a) appartenant respectivement aux segments (31, 31a ; 61, 61a) soient accrochées aux fils de rive (45a, 46a et 55a, 56a) de chaque tronçon (4 et 5) ;
- à faire pivoter l'éclisse (3 ; 6) pour que les languettes (34c, 34b ; 34a, 34 et 64c, 64b ; 64a, 64) se trouvent respectivement à proximité des fils longitudinaux (41, 51) de chaque tronçon ;
- à encliqueter les fils longitudinaux (41, 51) à L'intérieur des cuvettes (36c, 36b, 36a, 36 ; 66c, 66b, 66a, 66) de chaque languette (34c, 34b, 34a, 34 ; 64c, 64b, 64a, 64) afin que les fils de trame extrêmes (40, 50) des tronçons (4 et 5) coopèrent avec les espaces libres (32, 35 ; 62, 65) ;
- et à assembler une seconde éclisse (3 ; 6) en face de la première.

## Patentansprüche

1. Verbinder für das Zusammenfügen von Teilstücken für Kabelführungen, die insbesondere aus Gittern aus geschweißten Metalldrähten bestehen, dadurch gekennzeichnet, daß er ein Winkelstück (30) umfaßt, dessen einer Schenkel eingeschnitten ist, um zwei Segmente (31, 31a) mit gleichen Abmessungen zu bilden, die durch einen freien Raum (32) getrennt sind, während jedes Segment ein Klammerprofil (33, 33a) aufweist, wobei der zweite Schenkel in vier identische Zungen (34,34a,34b,34c) geteilt ist, die jeweils gewellt sind, um einen Durchgang in Form einer Wanne (36,36a,36b,36c) zu bilden, und wobei die Zungen voneinander durch freie Räume (35,35a, 35b) getrennt sind, derart, daß der freie Raum (32) gegenüberliegend zu dem freien Raum (35) des anderen Schenkels angeordnet ist.

2. Verbinder zum Zusammenfügen von Teilstücken von Kabelführungen in Form eines geschweißten Gitters, dadurch gekennzeichnet, daß er ein Winkelstück (60) umfaßt, dessen einer Schenkel in zwei Segmente (61,61a) mit gleichen Abmessungen geschnitten ist, die durch einen freien Raum (62) getrennt sind, während jedes Segment ein Klammerprofil (63,63a) aufweist, wobei der zweite Schenkel in vier identische Zungen (64,64a,64b, 64c) aufgeschnitten ist, die jeweils gewellt sind, um einen Durchgang in Form einer Wanne (66,66a,66b,66c) zu bilden, und wobei die Zungen voneinander durch freie Räume (65,65a,65b) getrennt sind, von denen mindestens zwei (65a,65b) in ihren oberen Bereichen durch gekrümmte Bänder (67a,67b) geschlossen sind, die einerseits die Wanne (66b) mit der Wanne (66c) verbinden, derart, daß der freie Raum (65) sich gegenüberliegend zu dem freien Raum (62) des anderen Schenkels befindet.

3. Verfahren zum Zusammensetzen von Teilstücken von Kabelführungen in Form von geschweißten Gittern unter Verwendung eines Verbinders nach Anspruch 1 oder Anspruch 2, gekennzeichnet durch folgende Schritte:
- Anordnen von zwei aneinanderstoßenden Teilstücken (1,2) der Kabelführung;
- Anordnen eines ersten Verbinders (3,6) derart, daß seine jeweils zu den Segmenten (31,31a;61,61a) gehörenden Haken (33,33a; 63,63a) an den Längsdrähten (11,21) eingehängt werden, die sich in der Nähe des äußeren Randes jedes Teilstücks (1,2) befinden;
- Schwenken des Verbinders (3,6) derart, daß die Zungen (34,34a;34b,34c;64,64a;64b,64c) sich jeweils in der Nähe der Seitendrähte (16a,26a) jedes Teilstücks befinden;
- Einschnappen der Seitendrähte (16a,26a) in das Innere der Wannen (36,36a,36b,36c;66, 66a,66b,66c) jeder Zunge (34,34a,34b,34c; 64,64a,64b,64c), damit die äußeren Schußdrähte (10,20) der Teilstücke (1,2) mit den freien Räumen (32,35;62,65) zusammenarbeiten und
- Einsetzen des zweiten Verbinders (3,6) gegenüberliegend zu dem ersten.

4. Verfahren zum Zusammensetzen von Teilstücken eines Kabelwegs in Form von geschweißten Gittern unter Verwendung eines Verbinders nach Anspruch 1, gekennzeichnet durch folgende Schritte:
- Anordnen von zwei aneinanderstoßenden Teilstücken (4,5) des Kabelwegs;
- Anordnen eines ersten Verbinders (3,6) derart, daß seine jeweils zu den Segmenten (31,31a;61,61a) gehörenden Haken (33,33a; 63,63a) an den Seitendrähten (45a,46a,55a, 56a) jedes Teilstücks (4,5) eingehängt werden;
- Schwenken des Verbinders (3,6) derart, daß die Zungen (34c,34b;34a,34,64c,64b;64a,64) sich jeweils in der Nähe der Längsdrähte (41,51) jedes Teilstücks befinden;
- Einschnappen der Längsdrähte (41,51) in das Innere der Wannen (36c,36b,36a,36;66c,66b, 66a,66) jeder Zunge (34c,34b,34a,34;64c, 64b,64a,64), damit die äußeren Schußdrähte (40,50) der Teilstücke (4,5) mit den freien Räumen (32,35;62,65) zusammenarbeiten und
- Einsetzen eines zweiten Verbinders (3,6) gegenüberliegend zu dem ersten.

## Claims

1. Clip for the assembly of sections of cable track constituted in particular by meshwork of soldered metal wires, characterised in that it comprises a corner piece (30) of which one wing is cut to obtain two segments (31,31a)of the same dimensions, which are separated by a free space (32), whilst each segment presents a hooked profile (33,33a), the second wing being cut into four identical tongues (34,34a,34b,34c) which are each wave-shaped in order to constitute a passage in the form of a socket (36,36a,36b,36c), the tongues being separated from each other by free spaces (35,35a,35b) such that the free space (32) is opposite the free space (35) of the other wing.

2. Clip for the assembly of sections of cable track of soldered meshwork, characterised in that it comprises a corner piece (60) of which one of the wings is cut into two segments (61,61a) of the same dimensions, which are separated by a free space (62), whilst each segment presents a hooked profile, the second wing being cut into four identical tongues (64,64a,64b,64c) which are each wave-shaped in order to constitute a passage in the form of a socket (66,66a,66b,66c), the tongues being separated from each other by free spaces (65,65a,65b) of which at least two (65a and 65b) are closed in their upper parts by curved bands (67a and 67b) which allow on one side the linking of the socket (66) with the socket (66a) and on the other side the linking of the socket (66b) with the socket (66c), such that the free space (65) is located opposite the free space (62) of the other wing.

3. Method for the disposition of sections of cable track of soldered meshwork using a clip according to claim 1 or 2, characterised in that it comprises:
- placing two sections of cable track (1 and 2) end to end;
- presenting a first clip (3;6) such that its hooks (33,33a; 63,63a) engage respectively with the segments (31,31a; 61,61a), being coupled with the longitudinal wires near the outside margin of each segment (1 and 2);
- causing the clip (3;6) to pivot in a manner such that the tongues (34,34a;34b,34c and 64,64a;64b,64c) are located respectively near side wires (16a, 26a) of each segment;
- engaging the side wires (16a,26a) inside the sockets (36, 36a,36b,36c;66,66a,66b,66c) of each tongue (34,34a,34b,34c; 64,64a,64b,64c) such that the frame end wires (10,20) of the sections co-operate with the free spaces;
- and assembling a second clip opposite the first.

4. Method for the disposition of sections of cable track of soldered meshwork utilising a clip according to claim 1, characterised in that it comprises:
- placing two sections of cable track (4 and 5) end to end;
- presenting a first clip (3;6) such that its hooks (33,33a; 63,63a), engaging respectively the segments (31,31a;61,61a), are coupled with side wires of each section (4 and 5);
- causing the clip (3;6) to pivot such that the tongues (34c,36b;34a,34 and 64c,64b;64a,64) are located respectively adjacent the longitudinal wires (41,51) of each section;
- clipping the longitudinal wires (41,51) inside the sockets (36c,36b,36a,36;66c,66b,66a,66) of each tongue (34c,34b,34a,34;64c,64b,64a,64), whereby the frame end wires (40,50) of the sections (4 and 5) co-operate with the free spaces (32,35;62,65);
- and assembling a second clip (3; 6) opposite the first.
